# EUROPEAN PATENT APPLICATION

(11) **EP 0 533 494 A2**
(43) Date of publication of application: **24.03.1993**
(21) Application number: 92308541.9
(22) Date of filing: 18.09.1992
(51) Int. Cl.: G21F 9/28, G21F 9/30

(54) **Treatment of radioactivity contaminated soil**

(30) Priority: 18.09.1991 US 761060
(71) Applicant: British Nuclear Fuels PLC, Risley Warrington Cheshire, WA3 6AS (GB)
(72) Inventor: Brierley, Kenneth, Warrington, Cheshire (GB); Willis, John Stanley, Prescot, Merseyside (GB); Ellison, Michael Robert, Warrington, Cheshire (GB); White, David Anthony, LondonW10 6PS (GB)
(74) Representative: McCormack, Derek James

(57) **Abstract**

A process for the treatment of material which is or is suspected to be contaminated with one or more actinides or their radioactive decay products or fission products or other heavy metals, eg chromium, lead, cadmium or mercury or compounds thereof, which process includes contacting the said material with a liquid medium which comprises a solution as follows:
an aqueous solution which is free of heavy metal ions prior to use thereof and comprises ingredients which are naturally degradable to non-toxic products with or without mild physical assistance such as heat or ultra-violet radiation, said solution comprising:
(a) carbonated water;
(b) a conditioning agent;
and (c) a complexing agent which comprises the anion of a carboxylic acid having from 2 to 6 carbon atoms;

wherein the said process is for soil treatment for land remediation and includes the steps of removing soil from a site of contamination or suspected contamination, transporting the soil to a treatment site and washing the soil with the said liquid medium thereby dissolving contaminants as complexes in said liquid medium. The conditioning agent may be selected from hydrogen peroxide, ozone, oxygen-enriched air, potassium permanganate, hydrazine and hydroxylamine and the complexing agent may be an anion of a carboxylic acid selected from citric acid, acetic acid, oxalic acid and ethylenediamine tetracetic acid.

## Description

The present invention relates to land remediation and particularly to processes suitable for the treatment of soil which is or is suspected to be contaminated with heavy metals, actinides or compounds thereof and the like.

Published GB 2229312A by the present applicants describes an aqueous medium comprising a solution which was designed for the purpose of dissolving, to enable separation of, actinides contained in so-called Magnox sludge resulting from the long-term storage underwater of irradiated nuclear fuel encased in containers made of Magnox, a magnesium alloy:

The said solution herein referred to as "Solution X˝ is as follows:

Solution X comprises an aqueous solution which is free of heavy metal ions (prior to use thereof) and comprises ingredients which are naturally degradable to non-toxic products with or without mild physical assistance such as heat or ultra-violet radiation, said solution comprising:
(a) carbonated water;
(b) a conditioning agent;
and (c) a complexing agent which comprises the anion of a carboxylic acid having from 2 to 6 carbon atoms.

We have discovered that Solution X unexpectedly and beneficially has other applications. The said Solution X may be used in land remediation as follows:
According to the present invention there is provided a process for the treatment of material which is or is suspected to be contaminated with one or more actinides or their radioactive decay products or fission products or other heavy metals or compounds thereof, which process includes contacting the said material with a liquid medium which comprises Solution X as defined hereinbefore, wherein the said process is for soil treatment for land remediation and includes the steps of removing soil from a site of contamination or suspected contamination, transporting the soil to a treatment plant and washing the soil with the said liquid medium thereby dissolving contaminants as complexes in said liquid medium.

The process according to the present invention provides a method of treating soil so that the contaminants contained in soil are leached from the soil by dissolution in the said liquid medium comprising Solution X thereby restoring the soil to a substantially safer condition. The soil treated by the process of the present invention may be that obtained from the vicinity of a nuclear materials processing, storage or other nuclear plant or from an industrial zone in which heavy metals have contaminated the ground. It may also be from ground contaminated by application of sewage sludge or solids obtained from the dredging of silt or mud.

As stated above, the contaminants to be separated from contaminated soil by the process of the present invention include: (i) actinides or their radioactive decay products and compounds thereof; (ii) fission products; (iii) heavy metals and compounds thereof.

Actinides are elements having periodic numbers in the inclusive range 89 to 104. Solution X is particularly useful in dissolving plutonium or a plutonium-containing mixture of actinides and compounds thereof.

The term 'fission product' as used herein refers to those elements formed as direct products (or so-called 'fission fragments') in the fission of nuclear fuel and products formed from such direct products by beta decay. Fission products include elements in the range from selenium to cerium including elements such as ₅₆Ba, ₄₀Zr and ₅₂Te ₅₅Cs and ₅₈Ce.

Heavy metals desired to be separated by the process of the present invention include toxic metals such as chromium, lead, cadmium and mercury which are commonly found as earth contaminants near industrial plants employing chemicals containing those elements.

The contaminants separated by the process of the present invention may include a mixture of contaminants of the different types described above.

In Solution X described above the carbonated water may comprise CO₃⁻⁻ or HCO₃⁻ ions in aqueous solution.

The pH of the said aqueous solution comprising Solution X may be in the range 5 to 13, especially 5 to 9, and may be controlled using a carbonate such as sodium carbonate to provide the carbonated solution and/or use of another alkaline ingredient.

Desirably, the said process is one which may be carried out at a temperature of less than 35°C and which gives no toxic or explosive off gases.

Desirably, the said solution contains no ingredients, eg nitrates or sulphates, which will damage building materials, eg concrete, in which the material to be treated might be contained or promote a runaway reaction with uncorroded metals, eg any magnesium present.

The actinide(s), fission product(s), heavy metals and compounds thereof may dissolve in the aqueous medium as a carbonate compound as well as in the form of a complex:
The complexing agent of Solution X may be selected from the anion of a carboxylic acid in the group consisting of citric acid, acetic acid, oxalic acid and EDTA (ethylenediamine tetracetic acid).

The conditioning agent may comprise an oxidising agent such as hydrogen peroxide, ozone, oxygen-enriched air or potassium permanganate, or a reducing agent such as hydrazine or hydroxylamine. Hydrogen peroxide is preferred.

Desirably, the complexing agent is present in the said solution in a concentration in the range from 0.0001 to 5 Mol dm ⁻³, especially 0.0005 to 0.1 Mol dm ⁻³.

Desirably, the said conditioning agent is present in the said solution in a concentration in the range from 0.01 Molar to 3 Molar.

It is believed that the conditioning agent changes the oxidation state of the contaminant metal to a state which renders the metal soluble by forming a complex with the complexing agent and/or by the natural solubility of the conditioned cation in the leaching solution. The complex produced by the complexing agent and the metal may facilitate the oxidation or reduction carried out by the conditioning agent.

For example, it is thought that citrate ions and insoluble plutonium form a soluble plutonium complex, and that the presence of citrate ions facilitates the oxidation of the plutonium by the conditioning agent, eg hydrogen peroxide, to a more soluble oxidation state, such as plutonium (IV).

Although actinide dissolution by treatment of actinide-containing soil with an aqueous solution is known in the prior art such treatment is essentially employed in the uranium mining industry to recover uranium from the soil. The prior art treatment has been applied quite differently from that of the process of the present invention in that the prior art treatment has been applied directly to the ground in-situ. The solutions employed in the prior art mining processes have not been suitable for direct application to land remediation work since, unlike Solution X, they are unsuitable for the required dissolution.

A number of the major hazardous contaminants other than uranium which might be encountered include other actinides such as plutonium, americium and neptunium. These elements have a chemistry which is quite different from that of uranium. Such contaminants can be dissolved by Solution X.

In the process of the present invention the aqueous medium comprising Solution X and the soil to be washed are desirably mixed together by a stirring or churning action in a mixer to permit suitable intimate contact between the particles of the soil and the aqueous medium. Washing may be preceded by separation based on particle size to segregate a substantially 'clean' soil fraction. The contaminants are washed into the solution comprising the aqueous medium which is separated from the soil by a suitable separation process such as decanting, and/or draining and filtration. The filtration may be by one or more of a number of known types of filtration systems such as vacuum filters, pressure filters and ultrafilters. As an alternative to filtration, separation may be achieved by use of hydrocyclones or centrifuging.

As an alternative to the mixing process the aqueous medium may be percolated through the soil to wash it. The medium may be applied to the soil by spraying for example.

In the vessel employed for contacting the soil to be washed with the aqueous medium the soil may be washed in successive discrete batches. Alternatively, the soil may be continuously fed into and extracted from the vessel.

Actinides contained in the dissolved contaminants are desirably recovered in concentrated form from the aqueous medium after separation therefrom of the washed soil.

The recovery may be by one of the known methods employed for recovering actinides from solutions in which they are dissolved, such as evaporation, and/or solvent extraction and/or ion exchange, and/or floc treatment. Other processes such as reverse osmosis may be employed to purify the separated aqueous liquid medium further which, after purification, may be re-used, eg by recirculation, in the soil washing process. Individual actinides recovered in the manner described may be further separated by known selective separation techniques.

The contaminant concentrate residue obtained from the above processes after separation of actinides may be disposed of in a manner suitable for the type of contaminant involved. For example, where the contaminants include fission products the residue may be handled and disposed of by one of the methods known for the disposal of high level or intermediate level radioactive waste associated with irradiated nuclear fuel. For example, the residue may be encapsulated in glass by a known vitrification technique carried out remotely within a radiation- stable structure eg made of concrete.

Actinide separation and residue vitrification processes are currently employed by the present Applicants at their Sellafield reprocessing plants.

The objective of using the process of the present invention is that after the soil washing process has taken place the soil is reduced to a safer state. Normally, it will be re-transported to the site from which it was excavated and allowed to be relaid. Care is taken not to re-contaminate the soil by contact with untreated soil. In many cases the state of the treated soil should be sufficiently safe, either immediately or after a suitable time, that it can be used in applications where the public may have access to the land of which it forms part.

Embodiments of the present invention will now be described by way of example.

Example 1 Soil from the land adjacent to a nuclear materials processing facility which land is contaminated with actinides and fission products is treated to recover the actinides and fission products as follows. Firstly, contaminated soil is separated from uncontaminated soil by excavation and is boxed and transported to a treatment site. At the treatment site a solution which is an example of Solution X comprising water, sodium carbonate, sodium citrate (0.1M concentration as a typical example) and H₂0₂ (0.1M as a typical example) is continuously sprayed at ambient temperature over the top surface of the soil and is allowed to percolate through the soil to a collecting trough below, where it is collected. The collected solution is transferred to an ion exchange plant where the actinide and fission product complexes are held. The actinides can subsequently be recovered from the resin in a known way, eg by addition of a solution of nitric acid which redissolves the captured actinides. The washed soil is allowed to dry by evaporation and is then reboxed and re transported to the site from which it came, the treated soil being segregated from further untreated soil.

Example 2 Soil contaminated with actinides especially Pu, Am and Np and fission products is transported to a treatment plant as in Example 1. At the treatment plant the soil is formed into a slurry by mixture in a mixing vessel with the same Solution X solution as employed in Example 1. The slurry is then stirred for one hour after which the excess liquid is drained from the vessel and the remainder of the solution containing the dissolved contaminants is separated from the slurry by filtration. The contaminants are subsequently recovered from the solution containing them by floc treatment. The hazardous residue separated by the floc treatment process is encapsulated and transported to a repository. The washed soil is returned to its original site as in Example 1.

Example 3 Soil from the land adjacent to an industrial plant contaminated with non-radioactive but toxic heavy metal, eg chromium and/or lead and/or cadmium and/or mercury is separated from uncontaminated soil and then transported to a treatment site and treated as in Example 1 or 2. The resulting soil after washing, separation of the treatment solution and drying is subsequently returned to the site from its original site.

Example 4 In order to demonstrate the effect of the combination of the ingredients in the three-component solution comprising Solution X as defined above in a process embodying the present invention samples of a soil sludge containing solid actinide contaminants were treated in turn in a glove box with samples of three test solutions as follows:
Solution A: an aqueous solution containing 0.005M sodium citrate; 0.89M H₂O₂ and carbon dioxide bubbled in the solution to saturation;
Solution B: an aqueous solution containing 0.005M sodium citrate; plus carbon dioxide bubbled in the solution to saturation;
Solution C: an aqueous solution containing 0.89M H₂O₂ plus carbon dioxide bubbled into the solution to saturation.

After contact of the sludge sample with Solution A at ambient temperature for 72 hours the following percentages of uranium, plutonium, americium, magnesium antimony and caesium (all present in the original sludge) were found to have been dissolved by the solution: 98, 93, 87, 100, 100, 99 respectively (all percentages may be raised to 100 by increasing the contact time and/or the citrate concentration).

After contact of the sludge sample with Solution B at ambient temperature for 72 hours the dissolution percentages of U, Pu, Am, Mg, Sb and Cs were found to be 70, 62, 76, 100, 94, 62 respectively.

This demonstrates the surprising effectiveness of the three part citrate/H₂O₂/CO₂ solution as compared with solutions containing only two out of three of these ingredients for treatment of contaminated soils especially for the dissolution of Pu and Am which are especially hazardous elements if encountered in land remediation work.

## Claims

1. A process for the treatment of material which is or is suspected to be contaminated with one or more actinides or their radioactive decay products or fission products or other heavy metals or compounds thereof, which process includes contacting the said material with a liquid medium which comprises a solution as follows:
an aqueous solution which is free of heavy metal ions prior to use thereof and comprises ingredients which are naturally degradable to non-toxic products with or without mild physical assistance such as heat or ultra-violet radiation, said solution comprising:
(a) carbonated water;
(b) a conditioning agent;
and (c) a complexing agent which comprises the anion of a carboxylic acid having from 2 to 6 carbon atoms;
wherein the said process is for soil treatment for land remediation and includes the steps of removing soil from a site of contamination or suspected contamination, transporting the soil to a treatment site and washing the soil with the said liquid medium thereby dissolving contaminants as complexes in said liquid medium.

2. A process as in claim 1 and wherein the conditioning agent is selected from hydrogen peroxide, ozone, oxygen-enriched air, potassium permanganate, hydrazine and hydroxylamine.

3. A process as in claim 1 or claim 2 and wherein the complexing agent is an anion of a carboxylic acid selected from citric acid, acetic acid, oxalic acid and ethylenediamine tetracetic acid.

4. A process as in claim 1 and wherein the conditioning agent comprises an anion of citric acid and is present in a concentration of 0.0005 to 0.05 Mol dm ⁻³ and the conditioning agent comprises hydrogen peroxide and is present in a concentration of from 0.01 Molar to 3 Molar.

5. A process as in any one of the preceding claims and wherein the pH of the solution comprising the liquid medium is in the range 5 to 13.

6. A process as in any one of the preceding claims and wherein the process is carried out at a temperature of less than 35°C.

7. A process as in any one of the preceding claims and wherein the aqueous medium and the soil to be washed are mixed together by a stirring or churning action in a mixer to permit intimate contact between the particles of the soil and the aqueous medium whereby the contaminants are washed into the solution comprising the aqueous medium and the aqueous medium containing the contaminants is separated from the soil by a separation process.

8. A process as in any one of claims 1 to 6 and wherein the aqueous medium is percolated through the soil, the contaminants are washed into the solution comprising the aqueous medium and the aqueous medium containing the contaminants is separated from the soil by a separation process.

9. A process as in claim 7 or claim 8 and wherein actinides contained in the aqueous medium are recovered in concentrated form from the aqueous medium after separation therefrom of the washed soil.

10. A process as in any one of the preceding claims and wherein the soil separated from the liquid medium is re-transported to the site from which it was excavated.
